# EUROPÄISCHE PATENTSCHRIFT

(11) **EP 1 979 128 B1**
(45) Veröffentlichungstag und Bekanntmachung des Hinweises auf die Patenterteilung: **28.04.2010**
(21) Anmeldenummer: 07711357.9
(22) Anmeldetag: 18.01.2007
(51) Int. Cl.: B23Q 1/60

(54) **VORRICHTUNG ZUR HANDHABUNG VON TEILEN JEDWEDER ART, INSBESONDERE ZUM LINEAREN BE- UND ENTLADEN VON MASCHINEN**
APPARATUS FOR HANDLING PARTS OF ANY KIND, IN PARTICULAR FOR THE LINEAR LOADING AND UNLOADING OF MACHINES
DISPOSITIF DE MANUTENTION DE PIÈCES DE TYPE QUELCONQUE, EN PARTICULIER POUR LE CHARGEMENT ET LE DECHARGEMENT LINEAIRES DE MACHINES

(30) Priorität: 23.01.2006 DE 102006003321; 27.03.2006 DE 102006014408
(43) Veröffentlichungstag der Anmeldung: 15.10.2008
(73) Patentinhaber: FIBRO-GSA Automation GmbH, 74885 Hassmersheim (DE)
(72) Erfinder: MASSMANN, Joachim, 74831 Gundelsheim (DE)
(74) Vertreter: Ullrich & Naumann
(86) Internationale Anmeldenummer: PCT/EP2007/000421
(87) Internationale Veröffentlichungsnummer: WO 2007/082748

(56) Entgegenhaltungen:
- EP-A- 0 576 378
- EP-A2- 0 745 453
- WO-A-89/04744
- DE-U1- 9 214 125
- FR-A1- 2 681 055
- FR-A1- 2 741 331
- US-A- 5 315 526

## Beschreibung

Die Erfindung betrifft eine Vorrichtung zur Handhabung von Teilen jedweder Art, insbesondere zum linearen Be- und Entladen von Maschinen, mit einer Antriebseinheit zum linearen Verfahren eines Balkens, Auslegers oder dgl., wobei der Balken eine Führung für einen Wagen umfasst, gemäß dem Oberbegriff des Anspruchs 1, wie aus der FR 2 741 331 bekannt.

Gattungsbildende Vorrichtungen zur Handhabung von Teilen jedweder Art, insbesondere zum linearen Be- und Entladen von Maschinen, sind in den unterschiedlichsten Ausführungen aus der Praxis bekannt, und zwar mit linear verfahrbaren Balken und einem auf dem Balken verfahrbaren Wagen. Lediglich beispielhaft sei dazu auf die EP 0 745 453 A2 verwiesen.

Bei den bekannten Vorrichtungen zur Handhabung von Teilen jedweder Art, insbesondere zum linearen Be- und Entladen von Maschinen, ist typisch, dass der Balken, beispielsweise in Form eines Auslegers oder dgl., in eine vorgegebene Richtung verfahrbar ist. Eine zweite bewegliche Einheit, beispielsweise ein Greifer oder dgl., kann unabhängig davon entlang des Balkens verfahren werden. Weitere Einheiten, so beispielsweise auch ein Schlitten, verfährt regelmäßig unter einem vorgegebenen Winkel zu dem Balken, beispielsweise orthogonal dazu, um nämlich beispielsweise zwischen einem längs verfahrbaren Ausleger und einem Portalbalken einen Transfer bzw. eine Übergabe beliebigen Stückguts zu gestalten. Zur rein linearen Förderung sind Vorrichtungen der hier in Rede stehenden Art nicht geeignet, wobei diese obendrein konstruktiv aufwendig sind. Außerdem ist zur Gewährleistung einer hinreichenden Stabilität ein erheblicher konstruktiver Aufwand zu betreiben. Schließlich ist eine erhebliche Fläche zur Realisierung einer aus der EP 0 745 453 A2 bekannten Art der Förderung erforderlich.

Der vorliegenden Erfindung liegt daher die Aufgabe zugrunde, eine Vorrichtung zur Handhabung von Teilen der gattungsbildenden Art derart auszugestalten und weiterzubilden, dass bei einfachster Konstruktion eine lineare Förderung von Stückgut auf kleinstem Raum möglich ist.

Erfindungsgemäß ist die voranstehende Aufgabe durch die Merkmale des Patentanspruchs 1 gelöst.

Erfindungsgemäß ist zunächst einmal erkannt worden, dass eine Vorrichtung der hier in Rede stehenden Art für Linearbewegungen bzw. für translatorische Bewegungen dann besonders geeignet ist, wenn sich der Balken und der Wagen im Sinne einer teleskopartigen Anordnung bewegen lassen, nämlich dahingehend, dass der Balken und der Wagen in die gleiche Richtung verfahrbar sind und entsprechend gleichsinnig arbeiten. So erstreckt sich die Vorrichtung in eine Richtung und baut quer zu dieser Richtung äußerst klein. Außerdem lässt sich bei hinreichend guter Stabilität eine Art Teleskopführung mit möglichst kurzer Länge realisieren, nämlich gerade aufgrund des Verfahrens von Balken und Wagen in gleicher Richtung, nämlich aufgrund der Tatsache, dass der Balken und der Wagen gleichsinnig arbeiten. Auch eignet sich die erfindungsgemäße Vorrichtung in idealer Weise zum sogenannten Belade- und Entladehandling, wonach sich beliebiges Stückgut, d.h. sowohl Werkstücke als auch Werkzeuge, bei kürzest möglicher Anordnung in eine Maschine verbringen und aus einer Maschine herausnehmen lassen. Die gesamte Vorrichtung kann dem Rahmen der Maschine, so beispielsweise einer Grundplatte oder aber auch einem von der Maschine getragenen Winkelteil, zugeordnet sein. Eine Vorrichtung der erfindungsgemäßen Art kann beispielsweise als Shuttel-Achse zum Einsatz in einer beliebigen Bearbeitungsmaschine dienen, wobei mittels der erfindungsgemäßen Vorrichtung das Werkzeug oder Werkstück aus der Maschine heraus - und beispielsweise einem Band zugeführt wird.

Des Weiteren sei an dieser Stelle bereits angemerkt, dass die erfindungsgemäße Vorrichtung horizontal, vertikal oder unter einem beliebigen Winkel zur Horizontalen angeordnet sein kann. Zur beliebigen Energieversorgung kann der Balken mit einem konventionellen Kabelschleppsystem ausgestattet sein kann, um nämlich ein beschädigungsfreies Nachholen jedweder Versorgungsleitungen zu gewährleisten. Beliebige andere Arten Energieversorgung sind denkbar und lassen sich bei der beanspruchten Vorrichtung anwenden.

Weiter erfindungsgemäß umfasst die Antriebseinheit ein ortsfestes Antriebselement und ein dem Balken fest zugeordnetes, mit dem Balken bewegliches Antriebselement, wobei die Antriebselemente unmittelbar oder mittelbar, beispielsweise über ein Getriebe oder über sonstige Verbindungsmittel, aufeinander wirken. Dabei ist es von weiterem Vorteil, wenn das ortsfeste Antriebselement außerhalb des Arbeitsraumes des Balkens, vorzugsweise seitlich daneben, angeordnet ist. Mit anderen Worten ist das ortsfeste Antriebselement dem Boden, einem Maschinengestell oder einer sonstigen Trägerkonstruktion zugeordnet. Gleiches gilt für die Führung des Balkens, wobei diese Zuordnung identisch sein kann. Aufgrund der Anordnung des ortsfesten Antriebselements seitlich des Balkens lässt sich dieser so niedrig wie möglich bauen. Die seitliche Erstreckung der gesamten Anordnung lässt sich ebenfalls auf ein Mindestmaß reduzieren.

In besonders vorteilhafter Weise kommt als Antriebselement ein ortsfester Zahnriemen in Frage, mit dem ein dem Balken fest zugeordnetes Antriebselement als bewegliches Antriebselement kämmt. Insbesondere im Hinblick auf eine besonders stabile Ausführung ist das ortsfeste Antriebselement als Zahnstange ausgeführt, mit der ein dem Balken fest zugeordnetes Antriebselement als bewegliches Antriebselement kämmt, wobei dieses in weiter vorteilhafter Weise als Zahnrad oder dgl. ausgeführt sein kann.

Zu Justagezwecken kann das ortsfeste Antriebselement, so beispielsweise die Zahnstange, in seiner relativen Lage zu dem Balken verstellbar sein. Erfindungsgemäß ist das dem Balken zugeordnete Antriebselement in seiner Position entlang dem Balken zumindest geringfügig verstellbar, und zwar ebenfalls zu Justagezwecken. Auch ist eine Verstellung relativ zu dem ortsfesten Antriebselement, so beispielsweise zu der Zahnstange, von Vorteil. Die Verstellung des Antriebselements kann über eine Verstellt-/Justageplatte erfolgen, die wiederum am bzw. mit dem Balken verschraubbar ist. Jedwede sonstigen Befestigungsmöglichkeiten am Balken sind denkbar.

Wie bereits zuvor erwähnt, kann es sich bei dem dem Balken zugeordneten Antriebselement um ein rotationssymmetrisches Antriebselement handeln, beispielsweise um ein Zahnrad, welches mit der Zahnstange kämmt. An dieser Stelle sei angemerkt, dass jedwede Kopplungsmittel zwischen dem Maschinengestell und dem verfahrbaren Balken in Frage kommen, um nämlich die lineare Bewegung des Balkens zu gewährleisten.

Zum Antrieb des linear verfahrbaren Balkens umfasst die Antriebseinheit in weiter vorteilhafter Weise einen dem Balken fest zugeordneten Motor. Dabei kann es sich um jedwede Art von Antriebsmotor - mit oder ohne Getriebe - handeln, beispielsweise auch um einen Torque-Motor. Der Antriebsmotor kann in vorteilhafter Weise als Elektromotor ausgeführt sein. Dieser Motor treibt, vorzugsweise über ein Getriebe - mit Unter- oder Übersetzung, das dem Balken zugeordnete Antriebselement an, welches sich gegen das feststehende Antriebselement, beispielsweise gegen die Zahnstange, abstützt und dagegen wirkt.

In weiter vorteilhafter Weise ist der Motor auf der dem Antriebselement bzw. den Antriebselementen gegenüberliegenden Seite des Balkens angeordnet. Entsprechend ist der Motor über eine sich durch den Balken hindurch erstreckende Welle mit dem dem Balken zugeordneten Antriebselement verbunden. Eine solche Anordnung begünstigt abermals die kleine Bauweise der gesamten Anordnung.

Der Motor kann ausschließlich zum Antrieb des Balkens dienen, wobei der Motor auch gleichzeitig den Wagen auf dem Balken antreiben kann. Dies wird später noch erörtert werden.

Wie bereits zuvor ausgeführt, ist der Balken als autonome Fördereinrichtung zu verstehen, nämlich als für sich gesehen unabhängiger Linearantrieb. Zum Bewegen des auf dem Balken geführten Wagens sind besondere Antriebsmittel vorgesehen, wobei diese eine Zahnstange, einen Riemen, so beispielsweise einen Keilriemen, Zahnriemen oder dgl., umfassen können.

Sofern es sich bei den Antriebsmitteln um eine Zahnstange bzw. um eine Anordnung von Zahnstangen handelt, könnte die Zahnstange vorzugsweise seitlich am Wagen angeordnet sein. Über ein Zahnrad könnte diese Zahnstange mit einer ortsfesten Zahnstange kämmen, die wiederum dem Rahmenteil zugeordnet ist. So wäre in vorteilhafter Weise ein Antrieb über Zahnstangen unter Zwischenschaltung eines Zahnrads geschaffen.

Sofern die Antriebsmittel einen Riemen umfassen, könnte dieser in etwa mittig des Balkens angeordnet sein. Der Riemen würde vorzugsweise zwischen zwei Leisten des Balkens im Wesentlichen über die gesamte Länge des Balkens hinweg verlaufen. Dabei kann der Riemen endlos ausgestaltet sein, wobei der Wagen an dem Riemen angeklemmt, festgeschraubt oder sonst wie befestigt ist. Das Spannen des Riemens kann über endseitige Spanneinrichtungen erfolgen.

Ebenso ist es dankbar, dass der Riemen mittig des Balkens zwischen den beiden Leisten im Wesentlichen über die gesamte Länge des Balkens hinweg verläuft, wobei der Riemen mit freien Enden am Wagen befestigt ist. Im Rahmen einer solchen Ausgestaltung können dem Wagen Spannmittel zugeordnet sein, über die sich der Riemen - am Wagen - spannen und auch wieder lösen lässt.

Im Rahmen der zuvor erörterten Ausgestaltung, nämlich unter Zugrundelegung zweier separater Leisten, die gemeinsam den Balken bilden, ist es von weiterem Vorteil, wenn jede der Leisten des Balkens eine Führung für den Wagen trägt. Entsprechend ist es von weiterem Vorteil, wenn der Wagen mit insgesamt vier Führungsblöcken ausgestattet ist, mit denen der Wagen auf bzw. in den Führungen des Balkens läuft. Über endseitige Rollen zwischen den Leisten des Balkens wird der Riemen umgelenkt. Sofern die Spannmittel für den Riemen dem Balken bzw. den Leisten des Balkens zugeordnet sind, bietet es sich an, die Lager für die Rollen bzw. die die Lager haltende Blöcke in den Leisten verschiebbar bzw. spannbar zu gestalten.

Als Antriebsmittel für den Wagen dient vorzugsweise ein dem Balken fest zugeordneter Antriebsmotor, wobei es sich dabei um einen Antriebsmotor jedweder Art handeln kann. Insbesondere lassen sich hier Elektromotoren verwenden. Grundsätzlich ist auch ein pneumatischer Antrieb denkbar. Der Motor treibt den Wagen vorzugsweise über ein Getriebe an, wobei der Antrieb insbesondere über eine der beiden Rollen erfolgt, um die der zum Antrieb dienende Riemen läuft.

Wie auch im Falle des Antriebs bzw. Motors des Balkens ist auch der als Antrieb für den Wagen dienende Motor auf der den Antriebselementen des Balkens gegenüberliegenden Seite des Balkens angeordnet. So können insgesamt zwei unterschiedliche oder auch identische Motoren vorgesehen sein, nämlich einerseits zum Antrieb des Balkens und andererseits zum Antrieb des auf dem Balken verfahrbaren Wagens.

In ganz besonders vorteilhafter Weise können der Balken und der Wagen über den gleichen Motor angetrieben werden, wobei in einem solchen Falle der zum gemeinsamen Antrieb von Balken und Wagen dienende Motor eine oder zwei Antriebswellen dreht, die vorzugsweise über ein Getriebe jeweils auf die Antriebsmittel des Wagens und auf die Antriebsmittel des Balkens wirken. Somit ist grundsätzlich ein einziger Motor ausreichend, um sowohl die Bewegung des Balkens als auch die Bewegung des Wagens auf dem Balken zu bewerkstelligen.

Insbesondere beim Antrieb durch einen einzigen Motor ist es von Vorteil, wenn der Balken über Antriebsräder und einen dazwischen wirkenden Antriebsriemen gegenüber dem ortsfesten Antriebselement angetrieben ist, wobei sämtliche Aggregate des Antriebs, mit Ausnahme des ortsfesten Antriebselements, vom Balken getragen sind. Beliebige andere Ankopplungsmöglichkeiten sind denkbar und realisierbar.

Grundsätzlich ist es des Weiteren möglich, dass der Wagen wie ein zweiter Balken ausgeführt ist, so dass der Balken und der Wagen sich zu einer Teleskopführung im Sinne eines linear arbeitenden Teleskopförderers ergänzen. Mehre Balken und Wagen können im Sinne einer Kaskade zueinander angeordnet sein, so dass sich insgesamt eine äußerst kurz bzw. klein bauende Teleskopeinheit mit mehreren Teleskopelementen ergibt.

Wie bereits zuvor erwähnt, ist der Balken mit zwei Führungssystemen ausgestattet, nämlich einerseits mit einem Führungssystem zur Führung des Balkens gegenüber dem Boden, einem Ständer, etc. und andererseits zur Führung des Wagens auf dem Balken. Beide Führungssysteme können identisch oder unterschiedlich ausgelegt sein, je nach Bedarf und je nach den aufzunehmenden Kräften.

Des Weiteren sei angemerkt, dass der Balken nebst Wagen horizontal, vertikal oder unter einem vorgebbaren Winkel arbeiten kann. Jedwede nur denkbare Anordnung der zuvor beschriebenen Vorrichtung ist denkbar.

Auch sei erwähnt, dass der Wagen zur Aufnahme von beliebigen Teilen dienen kann, so beispielsweise zur Aufnahme von Werkstücken, Werkzeugen und/oder sonstigen Handhabungsgeräten. So lässt sich die erfindungsgemäße Vorrichtung zum beliebigen Transfer von Teilen verwenden, insbesondere zum linearen Transfer von Teilen aus einer Bearbeitungsmaschine heraus und in eine Bearbeitungsmaschine hinein.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung zweier Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigt
- Fig. 1: in einer schematischen Ansicht ein erstes Ausführungsbeispiel einer erfindungsgemäßen Vorrichtung, wobei zum Antrieb des Balkens und des Tischs jeweils ein Motor vorgesehen ist,
- Fig. 2: in einer schematischen Ansicht ein zweites Ausführungsbeispiel einer erfindungsgemäßen Vorrichtung, wobei zum Antrieb des Balkens und des Wagens ein einziger Motor vorgesehen ist,
- Fig. 3: in einer schematischen Ansicht den Gegenstand aus Fig. 2 in einer Ansicht von der anderen Seite, d.h. von der Seite des Motors her gesehen,
- Fig. 4: in einer schematischen Ansicht ein drittes Ausführungsbeispiel einer erfindungsgemäßen Vorrichtung, wobei zum Antrieb des Wagens zwei Zahnstangen vorgesehen sind und
- Fig. 5: in einer schematischen Ansicht den Gegenstand aus Fig. 4 in einer Ansicht von der anderen Seite, d.h. von der Seite des Motors her gesehen.

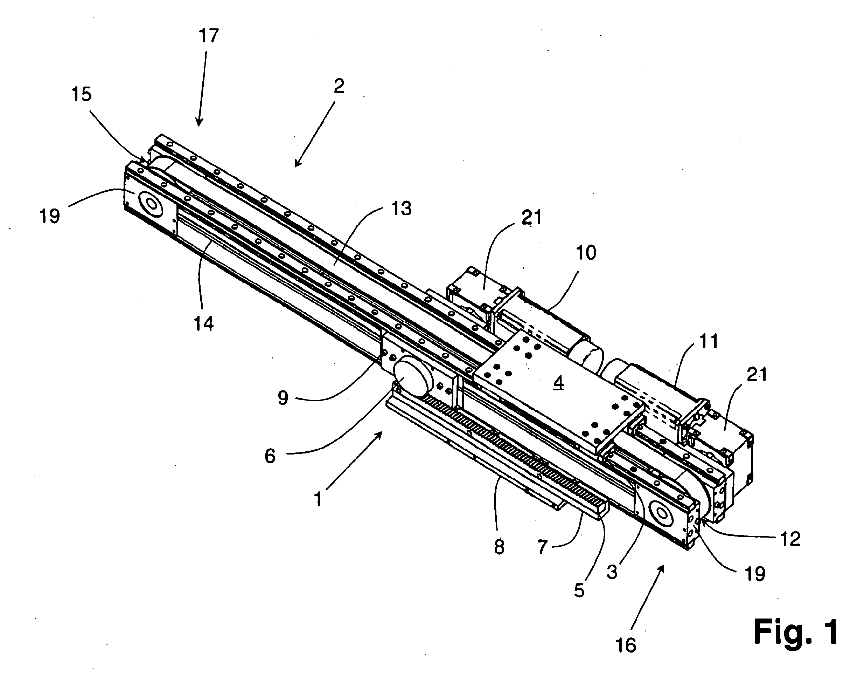

Die Figuren 1 bis 3 zeigen zwei unterschiedliche Ausführungsbeispiele einer erfindungsgemäßen Vorrichtung zur Handhabung von Teilen jedweder Art, insbesondere zum linearen Be- und Entladen von Maschinen. Die Vorrichtung umfasst eine Antriebseinheit 1 zum linearen Verfahren eines Balkens 2, wobei der Balken 2 zum linearen Fördern eines beliebigen Stückguts dient und für sich gesehen linear verfahrbar ist. Bei dem Balken 2 kann es sich beispielsweise um einen Ausleger handeln.

Die Figuren 1, 2 und 3 zeigen gemeinsam, dass der Balken 2 eine Führung 3 für einen Wagen 4 umfasst.
Erfindungsgemäß sind der Balken 2 und der Wagen 4 in die gleiche Richtung verfahrbar, sind also in der Lage, gleichsinnig zu arbeiten.

Fig. 1 zeigt deutlich, dass die Antriebseinheit 1 eine ortsfeste Antriebseinheit 5 und eine dem Balken 2 fest zugeordnete, mit dem Balken 2 bewegliche Antriebseinheit 6 umfasst, wobei die beiden Antriebseinheiten 5, 6 unmittelbar aufeinander wirken. Bei dem in Fig. 1 gezeigten Ausführungsbeispiel ist die ortsfeste Antriebseinheit 5 als Zahnstange und die bewegliche Antriebseinheit 6 als mit der Zahnstange kämmendes Zahnrad ausgeführt.

Die Zahnstange 5 ist über eine besondere Aufnahme 7 fest mit einem Rahmenteil 8 der jeweiligen Maschine verbunden. Über die Aufnahme 7 ist eine Justage der Zahnstange 5 möglich.

Fig. 1 zeigt des Weiteren, dass das Zahnrad 6 über eine Verstell-/Justageplatte 9 am Balken 2 einstellbar bzw. justierbar ist. Ansonsten ist die Anordnung des Zahnrads 6 fest.

Bei dem in Fig. 1 gezeigten Ausführungsbeispiel sind insgesamt zwei unterschiedliche Antriebe bzw. Motoren 10, 11 vorgesehen, nämlich ein Motor 10 zum Antrieb bzw. zum Verfahren des Balkens 2 und ein Motor 11 zum Verfahren des Wagens 4. Beide Motoren 10, 11 sind unabhängig voneinander ansteuerbar.

Fig. 1 zeigt des Weiteren, dass die Motoren 10, 11 auf der den beiden Antriebseinheit 5, 6 abgewandten Seite am Balken 2 angeordnet und mit diesem fest verbunden sind. Während der Motor 10 für den Balken 2 über eine nicht erkennbare Welle durch den Balken 2 hindurch an der beweglichen Antriebseinheit 6 bzw. am Zahnrad 6 - in dieser - endet, wobei das Zahnrad 6 mit der Zahnstange 5 kämmt, wirkt der Motor 11 für den Wagen 4 auf eine Antriebsrolle 12 zum Antrieb des Wagens 4. Ein zum Antrieb des Wagens 4 dienender Riemen 13 läuft zwischen zwei Leisten 14 des Balkens 2 sowohl über die Antriebsrolle 12 als auch über eine endseitige Umlenkrolle 15, so dass sich der Wagen 4 über den Riemen 13 beliebig hin und her verfahren lässt.

Fig. 1 lässt des Weiteren erkennen, dass der Balken 2 bzw. die Leisten 14 des Balkens 2 zwei unterschiedliche Führungssysteme haben, nämlich zum einen ein unteres Führungssystem 16 und zum anderen ein oberes Führungssystem 17. Das untere Führungssystem dient zum Führen des Balkens 2 gegenüber dem Rahmenteil 8, während das obere Führungssystem 17 zum Führen des Wagens 4 auf dem Balken 2 dient. Der Wagen 4 umfasst darüber hinaus vier Führungsblöcke 18, die zum oberen Führungssystem 17 gehören und über die sich der Wagen 4 kipp- und nahezu spielfrei führen lässt.

In Bezug auf Fig. 1 sei des Weiteren erwähnt, dass sich der Riemen 13 spannen lässt, und zwar über die endseitigen Lagerblöcke 19, in denen die Antriebsrolle 12 und die Umlenkrolle 15 gelagert sind.

Ebenso ist es möglich, dass bei festen Umlenkrollen 15 das Spannen des Riemens 13 unmittelbar am Wagen 4 erfolgt.

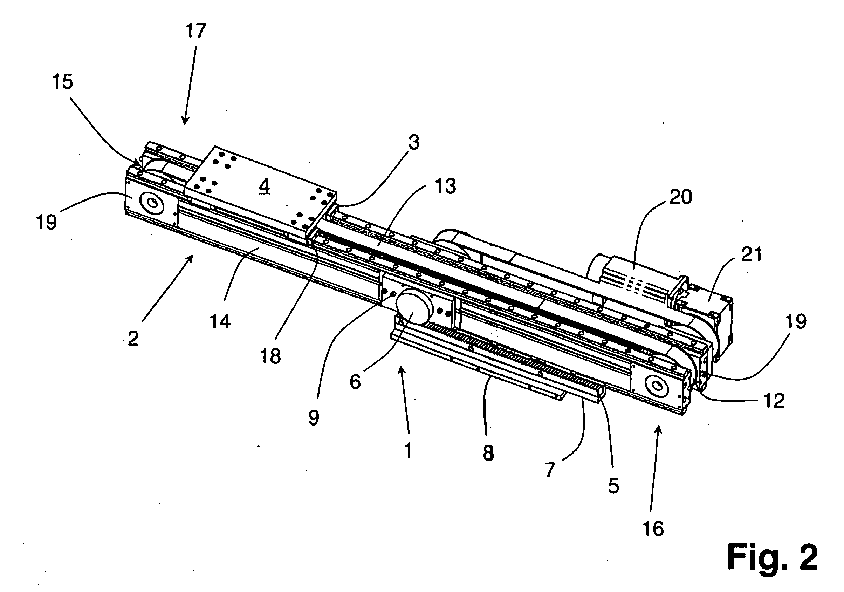

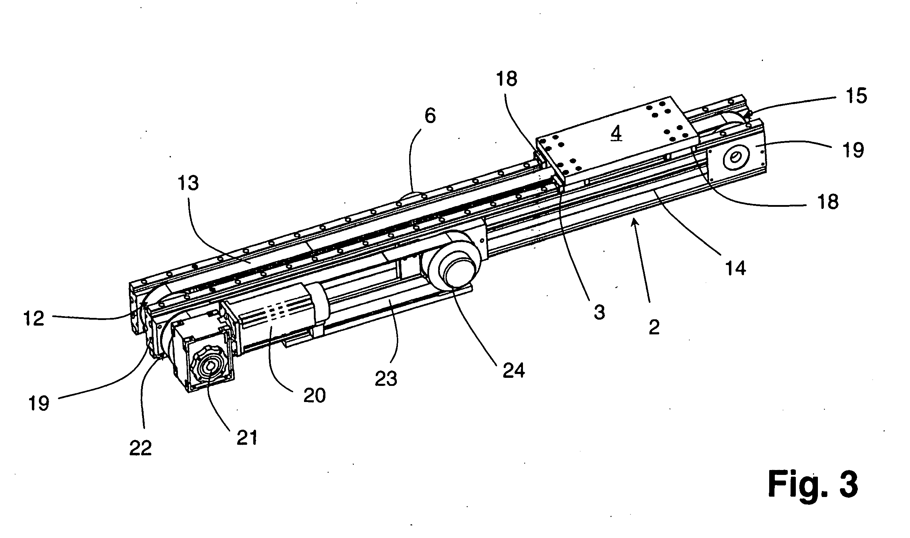

Die Figuren 2 und 3 zeigen - von unterschiedlichen Seiten her gesehen - ein zweites Ausführungsbeispiel einer erfindungsgemäßen Vorrichtung, wobei dort ein einziger Motor 20 sowohl zum Antrieb des Balkens 2 als auch zum Antrieb des Wagens 4 dient. Der sonstige Aufbau ist gegenüber dem Ausführungsbeispiel aus Fig. 1 unverändert. Die Bezeichnungen der Bauteile sind die gleichen.

Der gemeinsame Motor 20 gemäß dem Ausführungsbeispiel aus den Figuren 2 und 3 wirkt über ein Getriebe 21 sowohl auf die Antriebsrolle 12 und somit auf den Riemen 13 zum Antrieb des Wagens 4 als auch auf eine weitere Antriebsrolle 22, die wiederum einen Riemen 23, über den Riemen 23 eine Umlenkrolle 24 und über eine sich durch den Balken 2 hindurch erstreckende Welle das auf der anderen Seite des Balkens 2 angeordnete Zahnrad 6 antreibt, welches mit der ortsfesten Zahnstange 5 kämmt. Bei dem Getriebe 21 handelt es sich vorzugsweise um ein mehrstufiges Getriebe, über das sich die beiden Antriebsrollen 12, 22 unabhängig voneinander bewegen bzw. drehen lassen. So ist ein einziger Antrieb bzw. Motor 20 hinreichend, um beide Bewegungen zu realisieren, nämlich sowohl die Bewegung des Balkens 2 als auch die Bewegung des Wagens 4 auf den Balken 2.

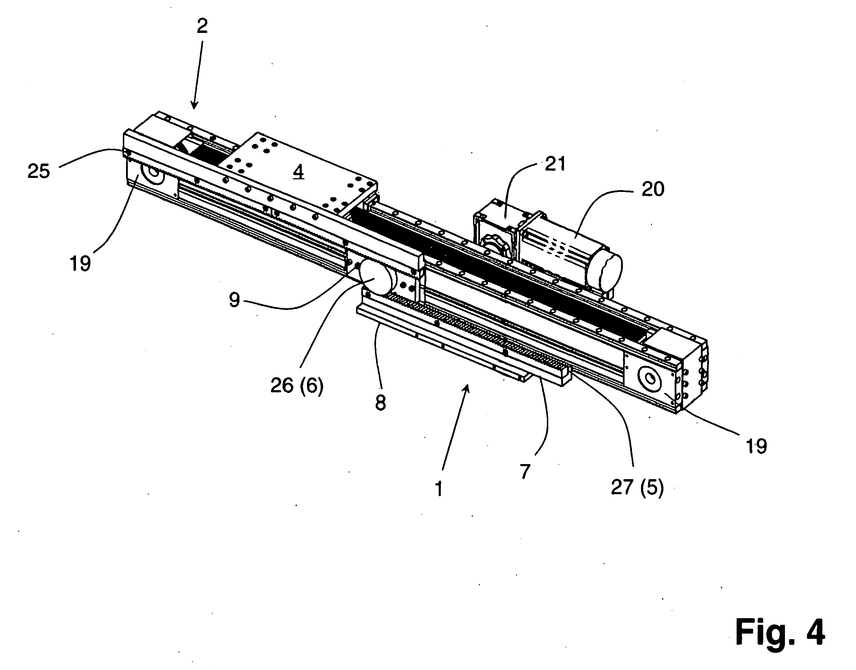

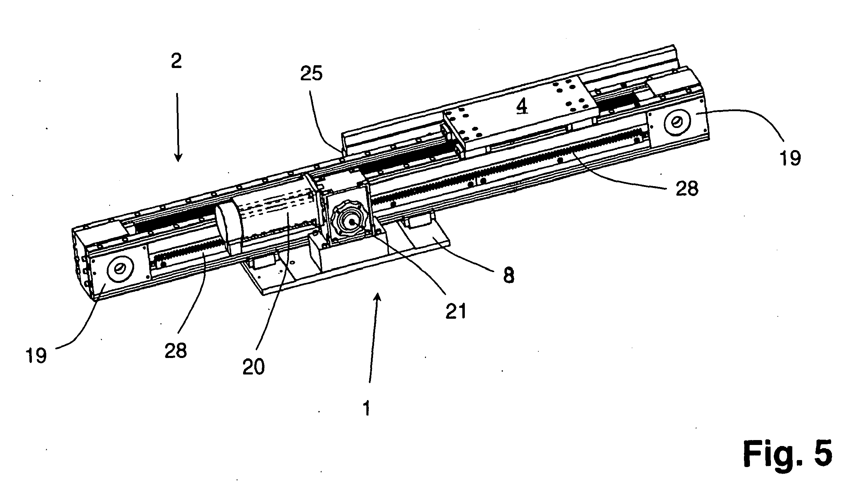

Die Fig. 4 und 5 zeigen ein drittes Ausführungsbeispiel einer erfindungsgemäßen Vorrichtung, wobei dort zum Antrieb des Wagens 4 eine Zahnstange 25 seitlich am Wagen 4 angeordnet ist. Über ein Zahnrad 26 wirkt die dem Wagen 4 zugeordnete Zahnstange 25 mit einer ortsfesten Zahnstange 27 zusammen, die wiederum dem Rahmenteil 8 zugeordnet ist. Folglich wird der Wagen 4 über eine Anordnung von Zahnstangen 25, 27 unter Zwischenschaltung eines Zahnrads 26 angetrieben.

Fig. 5 zeigt die Anordnung aus Fig. 4 von der anderen Seite her, d.h. von der Seite des Motors 20 her gesehen. Auch dort dient eine Zahnstange 28 zum Antrieb, nämlich zum Antrieb des gesamten Balkens 24, der wiederum den Wagen 4 trägt. Aufgrund der hier gewählten Anordnung ist lediglich ein einziger Motor 20 erforderlich, um nämlich sowohl den Balken 2 als auch den Wagen 4 anzutreiben.

Im Hinblick auf Merkmale, die sich den Figuren nicht entnehmen lassen, sei zur Vermeidung von Wiederholungen auf den allgemeinen Teil der Beschreibung verwiesen.

## Patentansprüche

1. Vorrichtung zur Handhabung von Teilen jedweder Art, insbesondere zum linearen Be- und Entladen von Maschinen, mit einer Antriebseinheit (1) zum linearen Verfahren eines Balkens (2), Auslegers oder dgl., wobei der Balken (2) eine Führung (3) für einen Wagen (4) umfasst, wobei der Balken (2) und der Wagen (4) in die gleiche Richtung verfahrbar sind und gleichsinnig arbeiten, wobei die Antriebseinheit ein ortsfestes Antriebselement (5) und ein dem Balken (2) fest zugeordnetes, mit dem Balken (2) bewegliches Antriebselement (6) umfasst, und wobei die Antriebselemente (5, 6) unmittelbar oder mittelbar aufeinander wirken,
**dadurch gekennzeichnet, dass** die Antriebseinheit (1) als ortsfestes Antriebselement (5) einen ortsfesten Zahnriemen oder eine ortsfeste Zahnstange (5) umfasst, mit dem bzw. mit der ein dem Balken (2) fest zugeordnetes bewegliches Antriebselement (6) kämmt, wobei das dem Balken (2) zugeordnete Antriebselement (6) in seiner Position entlang dem Balken (2) oder in seiner Position am Balken (2) relativ zu dem ortsfesten Antriebselement (5) zumindest geringfügig verstellbar ist.

2. Vorrichtung nach Anspruch 1, **dadurch gekennzeichnet, dass** das ortsfeste Antriebselement (5) außerhalb des Arbeitsraumes des Balkens (2), vorzugsweise seitlich daneben, angeordnet ist.

3. Vorrichtung nach einem der Ansprüche 1 bis 2, **dadurch gekennzeichnet, dass** das dem Balken (2) zugeordnete Antriebselement (6)
in seiner Position am Balken (2) relativ zu dem ortsfesten Antriebselement (5) zumindest geringfügig verstellbar ist, wobei
die Verstellung des Antriebselements (6) über eine Verstell-/Justageplatte (9) erfolgen kann.

4. Vorrichtung nach einem der Ansprüche 1 bis 3, **dadurch gekennzeichnet, dass** das dem Balken (2) zugeordnete Antriebselement (6) als rotationssymmetrisches Antriebselement, vorzugsweise als Zahnrad oder dgl., ausgeführt ist.

5. Vorrichtung nach einem der Ansprüche 1 bis 4, **dadurch gekennzeichnet, dass** die Antriebseinheit (1) einen dem Balken (2) fest zugeordneten Motor (10), vorzugsweise in Form eines Elektromotors, umfasst, der vorzugsweise über ein Getriebe (21) das dem Balken (2) zugeordnete Antriebselement (6) antreibt, wobei
der Motor (10) auf der dem Antriebselement (6) gegenüberliegenden Seite des Balkens (2) angeordnet sein kann, wobei
der Motor (10) über eine sich durch den Balken (2) hindurch erstreckende Welle mit dem dem Balken (2) zugeordneten Antriebselement (6) verbunden sein kann und wobei
der Motor (10) ausschließlich zum Antrieb des Balkens (2) dienen kann.

6. Vorrichtung nach einem der Ansprüche 1 bis 5, **dadurch gekennzeichnet, dass** der Balken (2) Antriebsmittel für den Wagen (4) umfasst, wobei
die Antriebsmittel für den Wagen (4) eine Zahnstange (25) oder einen Riemen (13), beispielsweise einen Keilriemen, Zahnriemen oder dgl., umfassen können, wobei
die Zahnstange (25) vorzugsweise seitlich am Wagen (4) angeordnet ist und über ein Zahnrad (26) mit einer ortsfesten Zahnstange (27), die vorzugsweise dem Rahmenteil (8) zugeordnet ist, kämmt oder wobei
der Riemen (13) in etwa mittig des Balkens (2), vorzugsweise zwischen zwei Leisten (14) des Balkens (2) im Wesentlichen über die gesamte Länge hinweg, endlos läuft und dass der Wagen (4) an dem Riemen (13) angeklemmt, festgeschraubt oder sonst wie befestigt ist oder wobei
der Riemen (13) in etwa mittig des Balkens (2), vorzugsweise zwischen zwei Leisten (14) des Balkens (2) im Wesentlichen über die gesamte Länge hinweg, läuft und dass der Wagen (4) an dem Riemen (13) befestigt ist.

7. Vorrichtung nach Anspruch 6, **dadurch gekennzeichnet, dass** der Wagen (4) Spannmittel zum Spannen des Riemens (13) umfasst und/oder wobei
jede der Leisten (14) des Balkens (2) eine Führung für den Wagen (4) tragen kann und wobei
der Wagen (4) mit insgesamt vier Führungsblöcken (18) auf bzw. in den Führungen laufen kann.

8. Vorrichtung nach Anspruch 6 oder 7, **dadurch gekennzeichnet, dass** der Riemen (23) über endseitige Rollen des Balkens (2) umgelenkt ist.

9. Vorrichtung nach einem der Ansprüche 6 bis 8, **dadurch gekennzeichnet, dass** die Antriebsmittel für den Wagen (4) einen dem Balken (2) fest zugeordneten Motor (11), vorzugsweise einen Elektromotor, umfassen, der vorzugsweise über ein Getriebe (21) den Wagen (4), insbesondere über eine der beiden Rollen, antreibt, wobei
der Motor (11) auf der den Antriebselementen des Balkens (2) gegenüberliegenden Seite des Balkens (2) angeordnet ist.

10. Vorrichtung nach einem der Ansprüche 1 bis 9, **dadurch gekennzeichnet, dass** der Balken (2) und der Wagen (4) über den gleichen Motor (21) angetrieben werden, wobei
der zum gemeinsamen Antrieb von Balken (2) und Wagen (4) dienende Motor (20) eine oder zwei Antriebswellen dreht, die vorzugsweise über ein Getriebe (21) jeweils auf die Antriebsmittel des Wagens (4) und auf die Antriebselemente (5, 6) des Balkens (2) wirken.

11. Vorrichtung nach einem der Ansprüche 1 bis 10, **dadurch gekennzeichnet, dass** der Balken (2) über Antriebsräder und einen dazwischen wirkenden Antriebsriemen (23) gegenüber dem ortsfesten Antriebselement (5) angetrieben ist, wobei sämtliche Aggregate des Antriebs, mit Ausnahme des ortsfesten Antriebselements (5), vom Balken (2) getragen sind.

12. Vorrichtung nach einem der Ansprüche 1 bis 11, **dadurch gekennzeichnet, dass** der Wagen (4) wie ein zweiter Balken (2) ausgeführt ist, so dass der Balken (2) und der Wagen (4) sich zu einer Teleskopführung ergänzen, wobei
dass mehrere Balken (2) und Wagen (4) in Kaskade zueinander angeordnet sein können.

13. Vorrichtung nach einem der Ansprüche 1 bis 12, **dadurch gekennzeichnet, dass** der Balken (2) mit zwei Führungssystemen (16, 17) - einerseits zur Führung des Balkens (2) gegenüber dem Boden, einem Ständer, etc, und andererseits zur Führung des Wagens auf dem Balken (2) - ausgestattet ist, wobei
die Führungssysteme (16,17) identisch ausgeführt sein können und wobei
die Führungssysteme (16, 17) identisch oder unterschiedlich ausgeführt sein können.

14. Vorrichtung nach einem der Ansprüche 1 bis 13, **dadurch gekennzeichnet, dass** der Balken (2) nebst Wagen (4) horizontal, vertikal oder unter einem vorgebbaren Winkel arbeitet und/oder
dass der Wagen (4) zur Aufnahme von Werkstücken, Werkzeugen und/oder Handhabungsgeräten vorbereitet ist.

## Claims

1. Apparatus for handling parts of any kind, especially for linear loading and unloading of machines, having a drive unit (1) for linear displacement of a beam (2), boom or the like, wherein the beam (2) includes a guide (3) for a carriage (4), wherein the beam (2) and the carriage (4) are displaceable in the same direction and work in the same direction, wherein the drive unit includes a stationary drive element (5) and a drive element (6) that is fixedly associated with the beam (2) and is movable with the beam (2), and wherein the drive elements (5, 6) act on each other directly or indirectly,
**characterised in that** the drive unit (1) includes as the stationary drive element (5) a stationary toothed belt or a stationary rack (5) with which a movable drive element (6) fixedly associated with the beam (2) meshes, wherein the drive element (6) associated with the beam (2) is at least slightly adjustable in its position along the beam (2) or in its position on the beam (2) relative to the stationary drive element (5).

2. Apparatus according to claim 1, **characterised in that** the stationary drive element (5) is disposed outside the working area of the beam (2), preferably to the side thereof.

3. Apparatus according to either of claims 1 and 2, **characterised in that** the drive element (6) associated with the beam (2) is at least slightly adjustable in its position on the beam (2) relative to the stationary drive element (5), wherein
the adjustment of the drive element (6) may be effected by means of an adjustment plate (9).

4. Apparatus according to any one of claims 1 to 3, **characterised in that** the drive element (6) associated with the beam (2) is configured as a rotationally symmetrical drive element, preferably as a toothed wheel or the like.

5. Apparatus according to any one of claims 1 to 4, **characterised in that** the drive unit (1) includes a motor (10), preferably in the form of an electric motor, which is fixedly associated with the beam (2) and which drives the drive element (6) associated with the beam (2) preferably via a gear mechanism (21), wherein
the motor (10) may be disposed on the opposite side of the beam (2) from the drive element (6), wherein
the motor (10) may be connected to the drive element (6) associated with the beam (2) via a shaft extending through the beam (2) and wherein
the motor (10) may serve exclusively to drive the beam (2).

6. Apparatus according to any one of claims 1 to 5, **characterised in that** the beam (2) includes drive means for the carriage (4), wherein
the drive means for the carriage (4) may include a rack (25) or a belt (13), for example a V-belt, toothed belt or the like, wherein
the rack (25) is preferably disposed on the side of the carriage (4) and meshes via a pinion (26) with a stationary rack (27) which is preferably associated with the frame part (8), or wherein
the belt (13) extends endlessly approximately centrally of the beam (2), preferably between two rails (14) of the beam (2), substantially over the entire length, and the carriage (4) is clamped, bolted or otherwise secured to the belt (13) or wherein
the belt (13) extends approximately centrally of the beam (2), preferably between two rails (14) of the beam (2), substantially over the entire length, and the carriage (4) is secured to the belt (13).

7. Apparatus according to claim 6, **characterised in that** the carriage (4) includes tensioning means for tensioning the belt (13) and/or wherein
each of the rails (14) of the beam (2) may carry a guide for the carriage (4) and
wherein
the carriage (4) is able to run with a total of four guide blocks (18) on or in the guides.

8. Apparatus according to claim 6 or 7, **characterised in that** the belt (23) is looped around end rollers of the beam (2).

9. Apparatus according to any one of claims 6 to 8, **characterised in that** the drive means for the carriage (4) include a motor (11), preferably an electric motor, which is fixedly associated with the beam (2) and which drives the carriage (4) preferably via a gear mechanism (21), especially via one of the two rollers, wherein
the motor (11) is disposed on the opposite side of the beam (2) from the drive elements of the beam (2).

10. Apparatus according to any one of claims 1 to 9, **characterised in that** the beam (2) and the carriage (4) are driven by the same motor (21), wherein
the motor (20) serving to drive the beam (2) together with the carriage (4) turns one or two drive shafts respectively acting, preferably via a gear mechanism (21), on the drive means of the carriage (4) and on the drive elements (5, 6) of the beam (2).

11. Apparatus according to any one of claims 1 to 10, **characterised in that** the beam (2) is driven relative to the stationary drive element (5) via drive wheels and via a drive belt (23) acting therebetween, wherein all the units of the drive, with the exception of the stationary drive element (5), are carried by the beam (2).

12. Apparatus according to any one of claims 1 to 11, **characterised in that** the carriage (4) is configured like a second beam (2), so that the beam (2) and the carriage (4) together form a telescopic guide, wherein
a plurality of beams (2) and carriages (4) may be arranged in a cascade relative to one another.

13. Apparatus according to any one of claims 1 to 12, **characterised in that** the beam (2) is equipped with two guide systems (16, 17) - on the one hand for guiding the beam (2) relative to the floor, a pillar etc., and on the other hand for guiding the carriage (4) on the beam (2), wherein
the guide systems (16, 17) may be of identical configuration and wherein
the guide systems (16, 17) may be of identical or different configuration.

14. Apparatus according to any one of claims 1 to 13, **characterised in that** the beam (2) together with the carriage (4) operates horizontally, vertically or at a predefinable angle and/or
the carriage (4) is adapted to receive workpieces, tools and/or handling devices.

## Revendications

1. Dispositif de manutention de pièces de type quelconque, en particulier pour le chargement et le déchargement linéaires des machines, comportant une unité d'entraînement (1) pour le déplacement linéaire d'une barre (2), d'un bras ou élément similaire, ladite barre (2) étant munie d'un guidage (3) pour un chariot (4), ladite barre (2) et ledit chariot (4) pouvant être déplacés dans la même direction et travaillant dans le même sens, ladite unité d'entraînement étant munie d'un élément d'entraînement (5) fixe et d'un élément d'entraînement (6) mobile avec la barre (2) et associé de manière fixe à la barre (2), et les éléments d'entraînement (5, 6) agissant directement ou indirectement l'un sur l'autre,
**caractérisé en ce que** l'unité d'entraînement (1) comporte en tant qu'élément d'entraînement (5) fixe une courroie dentée fixe ou une crémaillère (5) fixe, sur laquelle engrène un élément d'entraînement (6) mobile associé de manière fixe à la barre (2), ledit élément d'entraînement (6) associé à la barre (2) pouvant être réglé au moins légèrement dans sa position le long de la barre (2) ou dans sa position sur la barre (2) par rapport à l'élément d'entraînement (5) fixe.

2. Dispositif selon la revendication 1, **caractérisé en ce que** l'élément d'entraînement (5) fixe est disposé en dehors de la zone de travail de la barre (2), de préférence latéralement à côté de celle-ci.

3. Dispositif selon l'une quelconque des revendications 1 à 2, **caractérisé en ce que** l'élément d'entraînement (6) associé à la barre (2) peut être réglé au moins légèrement
dans sa position sur la barre (2) par rapport à l'élément d'entraînement (5) fixe,
le réglage de l'élément d'entraînement (6) pouvant être effectué au moyen d'une plaque de réglage ou d'ajustement (9).

4. Dispositif selon l'une quelconque des revendications 1 à 3, **caractérisé en ce que** l'élément d'entraînement (6) associé à la barre (2) est réalisé sous la forme d'un élément d'entraînement à symétrie de révolution, de préférence sous la forme d'une roue dentée ou élément similaire.

5. Dispositif selon l'une quelconque des revendications 1 à 4, **caractérisé en ce que** l'unité d'entraînement (1) comporte un moteur (10), de préférence un moteur électrique, qui est associé de manière fixe à la barre (2) et qui actionne, de préférence par l'intermédiaire d'un engrenage (21), l'élément d'entraînement (6) associé à la barre (2),
le moteur (10) pouvant être disposé sur le côté de la barre (2) opposé à l'élément d'entraînement (6),
le moteur (10) pouvant être relié à l'élément d'entraînement (6) associé à la barre (2) par l'intermédiaire d'un arbre qui passe à travers la barre (2), et
le moteur (10) pouvant être utilisé exclusivement pour l'actionnement de la barre (2).

6. Dispositif selon l'une quelconque des revendications 1 à 5, **caractérisé en ce que** la barre (2) comporte des moyens d'entraînement pour le chariot (4),
lesdits moyens d'entraînement pour le chariot (4) pouvant comporter une crémaillère (25) ou une courroie (13), telle qu'une courroie trapézoïdale, une courroie dentée ou similaire,
la crémaillère (25) étant disposée de préférence latéralement sur le chariot (4) et engrenant par l'intermédiaire d'une roue dentée (26) avec une crémaillère (27) fixe, qui est associée de préférence à la partie (8) du châssis, ou
la courroie (13) s'étendant en boucle continue sensiblement au milieu de la barre (2), de préférence entre deux rives (14) de la barre (2) sensiblement sur toute la longueur, et **en ce que** le chariot (4) est attaché à la courroie (13) par vissage ou d'une autre manière, ou
la courroie (13) s'étendant sensiblement au milieu de la barre (2), de préférence entre deux rives (14) de la barre (2) sensiblement sur toute la longueur, et **en ce que** le chariot (4) est fixé sur la courroie (13).

7. Dispositif selon la revendication 6, **caractérisé en ce que** le chariot (4) comporte des moyens de tension destinés à tendre la courroie (13), et/ou
chacune des rives (14) de la barre (2) pouvant porter un guidage pour le chariot (4), et
le chariot (4) pouvant se déplacer avec quatre blocs de guidage (18) au total sur ou dans les guidages.

8. Dispositif selon la revendication 6 ou 7, **caractérisé en ce que** la courroie (13) est renvoyée par des poulies situées aux extrémités de la barre (2).

9. Dispositif selon l'une quelconque des revendications 6 à 8, **caractérisé en ce que** les moyens d'entraînement pour le chariot (4) comportent un moteur (11), de préférence un moteur électrique, qui est associé de manière fixe à la barre (2) et qui actionne, de préférence par l'intermédiaire d'un engrenage (21), le chariot (4), en particulier par l'intermédiaire de l'une des deux poulies,
le moteur (11) étant disposé sur le côté de la barre (2) opposé aux éléments d'entraînement de la barre (2).

10. Dispositif selon l'une quelconque des revendications 1 à 9, **caractérisé en ce que** la barre (2) et le chariot (4) sont actionnés par le même moteur (21),
ledit moteur (20), destiné à l'actionnement conjoint de la barre (2) et du chariot (4), faisant tourner un ou deux arbres d'entraînement, qui agissent, de préférence par l'intermédiaire d'un engrenage (21), respectivement sur le moyen d'entraînement du chariot (4) et sur les éléments d'entraînement (5, 6) de la barre (2).

11. Dispositif selon l'une quelconque des revendications 1 à 10, **caractérisé en ce que** la barre (2) est actionnée par rapport à l'élément d'entraînement (5) fixe par l'intermédiaire de roues d'entraînement et d'une courroie d'entraînement (23), agissant entre celles-ci, tous les organes du système d'entraînement, à l'exception de l'élément d'entraînement (5) fixe, étant portés par la barre (2).

12. Dispositif selon l'une quelconque des revendications 1 à 11, **caractérisé en ce que** le chariot (4) est réalisé à la manière d'une deuxième barre (2), de telle sorte que la barre (2) et le chariot (4) se complètent pour former un guidage télescopique,
**en ce que** plusieurs barres (2) et chariots (4) peuvent être disposés en cascade les uns par rapport aux autres.

13. Dispositif selon l'une quelconque des revendications 1 à 12, **caractérisé en ce que** la barre (2) est équipée de deux systèmes de guidage (16, 17) - d'une part, pour le guidage de la barre (2) par rapport au sol, un support, etc., et, d'autre part, pour le guidage du chariot sur la barre (2),
les systèmes de guidage (16, 17) pouvant être réalisés de manière identique, et
les systèmes de guidage (16, 17) pouvant être réalisés de manière identique ou différemment l'un de l'autre.

14. Dispositif selon l'une quelconque des revendications 1 à 13, **caractérisé en ce que** la barre (2), y compris le chariot (4), travaillent horizontalement, verticalement ou selon un angle prédéfinissable, et/ou
**en ce que** le chariot (4) est préparé pour recevoir des pièces, des outils et/ou des appareils de manutention.
